(19) Europäisches Patentamt
European Patent Office
Office européen des brevets

(11) **EP 3 879 198 A1**

(12) **EUROPEAN PATENT APPLICATION**
published in accordance with Art. 153(4) EPC

(43) Date of publication:
**15.09.2021 Bulletin 2021/37**

(21) Application number: **19888803.4**

(22) Date of filing: **27.05.2019**

(51) Int Cl.:
*F24F 11/64* (2018.01)    *F24F 11/79* (2018.01)
*F24F 11/77* (2018.01)    *F24F 11/86* (2018.01)
*F24F 11/61* (2018.01)    *F24F 11/62* (2018.01)
*F24F 11/52* (2018.01)    *F24F 13/14* (2006.01)
*F25B 49/02* (2006.01)    *F24F 110/10* (2018.01)
*F24F 110/20* (2018.01)    *F24F 110/30* (2018.01)

(86) International application number:
**PCT/CN2019/088470**

(87) International publication number:
**WO 2020/107827 (04.06.2020 Gazette 2020/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2018 CN 201811465024**
**30.11.2018 CN 201811463694**
**30.11.2018 CN 201811462836**

(71) Applicant: **GD Midea Air-Conditioning Equipment
Co., Ltd.
Foshan, Guangdong 528311 (CN)**

(72) Inventors:
• **LI, Shang
Foshan, Guangdong 528311 (CN)**
• **ZHANG, Wujun
Foshan, Guangdong 528311 (CN)**

(74) Representative: **Lam, Alvin et al
Maucher Jenkins
26 Caxton Street
London SW1H 0RJ (GB)**

(54) **CONTROL METHOD FOR AIR CONDITIONER, AIR CONDITIONER, AND COMPUTER READABLE STORAGE MEDIUM**

(57) Disclosed is a control method for an air conditioner, comprising the following steps: obtaining an air conditioner control parameter; adjusting an air guide angle of an air guide plate of the air conditioner according to an air guide plate control parameter; and adjusting the rotating speed of a fan of the air conditioner according to an air speed control parameter, and/or adjusting the operating frequency of a compressor of the air conditioner according to a frequency control parameter. Also disclosed in the present application are the air conditioner and a computer readable storage medium. The technical problems that production costs and maintenance costs of the air conditioner are increased and production efficiency is reduced are solved.

when a preset function is turned on, obtaining a control parameter of the air conditioner, the control parameter of the air conditioner includes at least one of an air deflector control parameter, an air speed control parameter and a frequency control parameter — S10

adjusting an air guide angle of the air deflector of the air conditioner according to the air deflector control parameter — S20

adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold — S30

FIG. 2

EP 3 879 198 A1

**Description**

**CROSS-REFERENCE TO RELATED APPLICATIONS**

This application claims priority to Chinese Application Nos. 201811465024.9, 201811463694.7, and 201811462836.8, all filed on November 30, 2018, and all entitled "METHOD FOR CONTROLLING AIR CONDITIONER, AIR CONDITIONER, AND COMPUTER READABLE STORAGE MEDIUM", the entire disclosure of which are incorporated herein by reference.

**TECHNICAL FIELD**

The present disclosure relates to the filed of air conditioner, and in particular to a method for controlling an air conditioner, an air conditioner, and a computer readable storage medium.

**BACKGROUND**

With the improvement of people's living standards, people have demanding requirements for the comfort of air conditioners. In order to improve the comfort of air conditioners, a special sensor is generally added into the existing air conditioner to control the operating parameters of the air conditioner based on the parameters obtained by the special sensor, which leads to increasing the production cost and the maintenance cost of the air conditioner, and decreasing the production efficiency.

**SUMMARY**

The main purpose of the present disclosure is to provide a method for controlling an air conditioner, an air conditioner and a storage medium, which aims to reduce the production cost of the air conditioner while ensuring the comfort index of the air conditioner.
In order to achieve the above objective, the present disclosure provides a method for controlling an air conditioner, including the following operations:

> turning on a preset function, and obtaining a control parameter of the air conditioner, wherein the control parameter of the air conditioner includes at least one of an air deflector control parameter, an air speed control parameter and a frequency control parameter;
> adjusting an air guide angle of an air deflector of the air conditioner according to the air deflector control parameter; and
> adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

Besides, in order to achieve the above objective, the present disclosure further provides an air conditioner, including: a memory, a processor, and a program for controlling the air conditioner stored in the memory and executable on the processor, the program, when executed by the processor, implements the following operations:

> turning on a preset function, and obtaining a control parameter of the air conditioner, wherein the control parameter of the air conditioner includes at least one of an air deflector control parameter, an air speed control parameter and a frequency control parameter;
> adjusting an air guide angle of an air deflector of the air conditioner according to the air deflector control parameter; and
> adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

Besides, in order to achieve the above objective, the present disclosure further provides a computer readable storage medium, a program for controlling an air conditioner is stored in the computer readable storage medium, the program, when executed by a processor, implements the following operations:

> turning on a preset function, and obtaining a control parameter of the air conditioner, wherein the control parameter of the air conditioner includes at least one of an air deflector control parameter, an air speed control parameter and a frequency control parameter;
> adjusting an air guide angle of an air deflector of the air conditioner according to the air deflector control parameter; and

adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

The embodiments of the present disclosure provides a method for controlling an air conditioner, an air conditioner and a storage medium. The method includes: when a preset function is turned on, obtaining a control parameter of the air conditioner, wherein the control parameter of the air conditioner includes at least one of an air deflector control parameter, an air speed control parameter and a frequency control parameter; adjusting an air guide angle of the air deflector of the air conditioner according to the air deflector control parameter; and adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold. Since the method for controlling the air conditioner proposed in the present disclosure achieves the purpose of ensuring that the blowing sensation index is greater than the preset threshold, and there is no need to add a special sensor for sensing, the effect of reducing the production cost of the air conditioner is achieved while ensuring the comfort index of the air conditioner.

## BRIEF DESCRIPTION OF THE DRAWINGS

FIG 1 is a schematic structural diagram of a terminal in a hardware operating environment according to an embodiment of the present disclosure.
FIG 2 is a schematic flowchart of a method for controlling an air conditioner according to a first embodiment of the present disclosure.
FIG 3 is a schematic flowchart of the method for controlling the air conditioner according to a second embodiment of the present disclosure.
FIG 4 is a schematic flowchart of the method for controlling the air conditioner according to a third embodiment of the present disclosure.
FIG. 5 is a schematic flowchart of the method for controlling the air conditioner according to a fourth embodiment of the present disclosure.

The realization of the objective, functional characteristics, and advantages of the present disclosure are further described with reference to the accompanying drawings.

## DETAILED DESCRIPTION OF THE EMBODIMENTS

It should be understood that the specific embodiments described herein are only used to explain the present disclosure, and are not intended to limit the present disclosure.
The main solution of the embodiment of the present disclosure is:

when a preset function is turned on, obtaining a control parameter of an air conditioner, the control parameter of the air conditioner includes at least one of an air deflector control parameter, an air speed control parameter and a frequency control parameter;
adjusting an air guide angle of an air deflector of the air conditioner according to the air deflector control parameter; and
adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

Since in the existing air conditioning technology, in order to improve the comfort of the air conditioner, a special sensor is generally added into the existing air conditioner to control the operating parameters of the air conditioner based on the parameters obtained by the special sensor, it leads to increasing the production cost and the maintenance cost of the air conditioner, and decreasing the production efficiency.
The embodiments of the present disclosure provides a method for controlling an air conditioner, an air conditioner and a storage medium. The method includes: turning on a preset function, and obtaining a control parameter of the air conditioner, wherein the control parameter of the air conditioner includes at least one of an air deflector control parameter, an air speed control parameter and a frequency control parameter; adjusting an air guide angle of the air deflector of the air conditioner according to the air deflector control parameter; and adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold. Since the method for controlling the air conditioner proposed in the present disclosure achieves the purpose of ensuring that the blowing sensation index is greater than the preset threshold, and there is no need to add a special sensor for sensing, the effect of reducing the production cost of the air conditioner is achieved while ensuring the comfort index of the air conditioner.

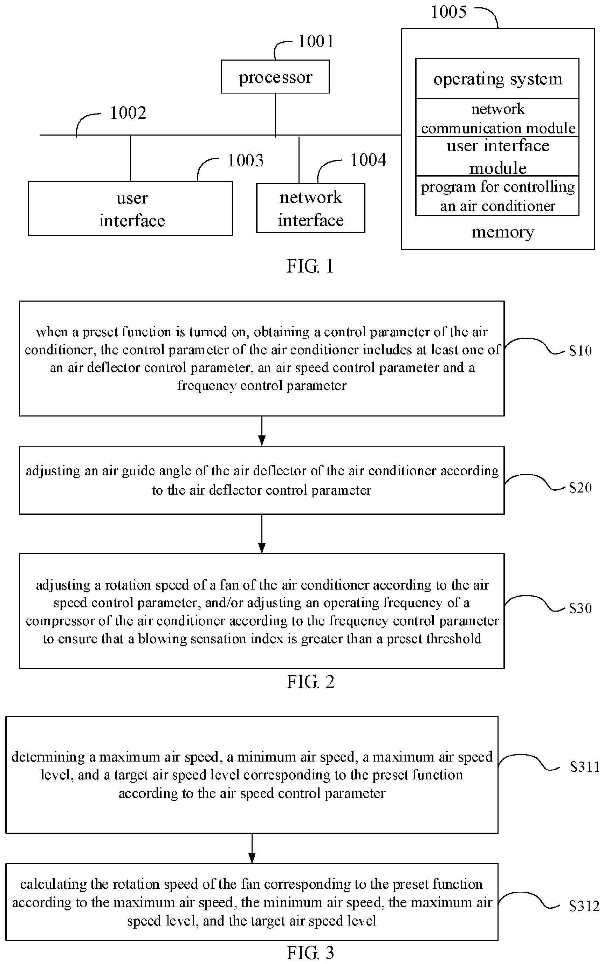

As shown in FIG. 1, FIG. 1 is a schematic structural diagram of a terminal in a hardware operating environment according to an embodiment of the present disclosure.

In some embodiments of the present disclosure, the terminal may be an air conditioner.

As shown in FIG. 1, the terminal may include a processor 1001, such as a CPU, a network interface 1004, a user interface 1003, a memory 1005, and a communication bus 1002. The communication bus 1002 is configured to implement communication between the components. The user interface 1003 may include a display, an input unit such as a keyboard. The user interface 1003 may also include a standard wired interface and a wireless interface. The network interface 1004 may further include a standard wired interface and a wireless interface (such as a WI-FI interface). The memory 1005 may be a high-speed random access memory (RAM) or a non-volatile memory, such as a magnetic disk memory. The memory 1005 may also be a storage device independent of the foregoing processor 1001.

Those skilled in the art should understand that the structure of the terminal shown in FIG. 1 does not constitute a limitation on the terminal, which may include more or fewer components, a combination of some components, or differently arranged components than shown in the figure.

As shown in FIG. 1, the memory 1005, as a computer storage medium, may include an operating system, a network communication module, a user interface module, and a program for controlling an air conditioner.

In the terminal shown in FIG. 1, the network interface 1004 is mainly configured to connect to a background server and perform data communication with the background server. The user interface 1003 is mainly configured to connect to a client (user end) and perform data communication with the client. The processor 1001 may be configured to call the program for controlling the air conditioner stored in the memory 1005, and perform the following operations:

> when a preset function is turned on, obtaining a control parameter of the air conditioner, the control parameter of the air conditioner includes at least one of an air deflector control parameter, an air speed control parameter and a frequency control parameter;
> adjusting an air guide angle of an air deflector of the air conditioner according to the air deflector control parameter; and
> adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

As shown in FIG. 2, FIG. 2 is a schematic flowchart of a method for controlling an air conditioner according to a first embodiment of the present disclosure. The method for controlling the air conditioner includes:

Operation S10, when a preset function is turned on, obtaining a control parameter of the air conditioner, the control parameter of the air conditioner includes at least one of an air deflector control parameter, an air speed control parameter and a frequency control parameter.

In this embodiment, the preset function refers to a preset operating mode of the air conditioner stored in a storage device of the air conditioner, and the turning on of the preset function refers to controlling the air conditioner to enter the preset operating mode. When the air conditioner enters the preset operating mode, the air conditioner may obtain the control parameter corresponding to the air conditioner in the preset operating mode, that is, the control parameter of the air conditioner corresponding to the preset operating mode. The air conditioner control parameter may include at least one of an air deflector control parameter, an air speed control parameter and a frequency control parameter.

The air deflector control parameter is configured to control an operating angle of the air deflector of the air conditioner, and the air speed control parameter and/or the frequency control parameter are respectively configured to control the speed of the fan of the air conditioner and/or the operating frequency of the compressor of the air conditioner.

In an embodiment, before the operation S10, the method for controlling the air conditioner further includes:

Operation S40, when receiving a start instruction of the preset function sent by a control terminal, turning on the preset function.

Specially, the preset function can be turned on through the control terminal. For example, the control terminal may be a control panel, a remote control and/or a smart terminal. When receiving the instruction to control the activation of the preset function sent by the control terminal, the air conditioner is controlled to turn on the preset function, that is, the air conditioner is controlled to work according to a working mode corresponding to the preset function. Since the air conditioner can be controlled to enter the preset function through the control terminal, the method for controlling the air conditioner proposed in the present disclosure avoids the technical defect that the preset function may not be activated in the implementation of the air conditioner automatically starting the preset function.

EP 3 879 198 A1

In an embodiment, after the operation S40, the method further includes:
Operation S50, outputting a prompt message about that the preset function has been turned on.
Since after the air conditioner turns on the preset function, a prompt message about that the preset function has been turned on can be output, the user can determine whether the air conditioner has executed the control command of the control terminal according to the prompt information, thereby avoiding repeated operations and misoperations.
Operation S20, adjusting an air guide angle of the air deflector of the air conditioner according to the air deflector control parameter.
In this embodiment, the air deflector includes an inner air deflector and an outer air deflector, and the air deflector control parameter includes an inner air deflector control parameter and an outer air deflector control parameter. When the air deflector control parameter is obtained, the inner air deflector can be controlled according to the inner air deflector control parameter, and the outer air deflector can be controlled according to the outer air deflector control parameter.
Specially, the operation S20 includes:

Operation S21, determining an inner air guide angle of the inner air deflector and an outer air guide angle of the outer air deflector according to the air deflector control parameter; and
Operation S22, adjusting an operating angle of the inner air deflector to the inner air guide angle, and adjusting an operating angle of the outer air deflector to the outer air guide angle.

When obtaining the air deflector control parameter, the inner air deflector control parameter is obtained according to the air deflector control parameter, and the inner air deflector control parameter may include an inner air guide angle to control the operating angle of the inner air deflector. It is also possible to obtain the outer air deflector control parameter according to the air deflector control parameter, and the outer air deflector control parameter may include an outer air guide angle to control the operating angle of the outer air deflector. The entity that executes the acquisition of the inner air guide angle and the outer air guide angle according to the air deflector control parameter may be a data processing unit of the air conditioner, and the data processing unit may be a CPU or a microprocessor. In order to realize the rapid processing of the control data and improve the response speed of the air conditioner, a special micro-processing only used for processing the control data of the air deflector may be added to the air conditioner. When the air conditioner enters the preset function, the special micro-processing can directly read the air deflector control parameter from the storage medium, and then determine the inner air guide angle and the outer air guide angle according to the air deflector control parameter.
After determining the inner air guide angle and the outer air guide angle, the operating angle of the inner air deflector is adjusted to the inner air guide angle, and the operating angle of the outer air deflector is adjusted to the outer air guide angle. The operating angle of the inner air deflector and the operating angle of the outer air deflector can be controlled by a stepping motor, or can be controlled by other mechanical devices, which is not limited in this embodiment.
It should be noted that the inner air guide angle and the outer air guide angle each may have a fixed value. When the operating angles of the inner air deflector and the outer air deflector of the air conditioner are adjusted to the inner air guide angle and the outer air guide angle, the cold air blown by the air conditioner will not directly blow to the human body, thereby ensuring the comfort of the air conditioner.
Operation S30, adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.
In this embodiment, when the preset function is turned on, the air speed control parameters and/or the frequency control parameter can be obtained.
In an embodiment, the operation S30 includes:

Operation S31, calculating the rotation speed of the fan corresponding to the preset function according to the air speed control parameter; and
Operation S32, adjusting an operating speed of the fan to the rotation speed of the fan.

In this embodiment, the implementation entity that executes the function of obtaining the air speed control parameter may be a CPU. When the air speed control parameter is obtained, a maximum air speed, a minimum air speed, a maximum air speed level, and a target air speed level corresponding to the preset function can be determined according to the air speed control parameter. Then, the fan speed corresponding to the preset function is calculated according to the minimum air speed, the maximum air speed level and the target air speed level. The operating speed of the fan of the air conditioner is adjusted to the fan speed, thus ensuring the cooling capacity of the air conditioner.
In an embodiment, the operation S30 includes:

Operation S33, obtaining an operating frequency table corresponding to the preset function;

5

Operation S34, determining a current operating time and a current humidity according to the frequency control parameter; and

Operation S35, querying the corresponding operating frequency in the operating frequency table according to the current operating time and the current humidity, and controlling the compressor to operate at the operating frequency.

In this embodiment, the operating frequency table pre-stored in the storage medium can be obtained, and the operating frequency table is a two-dimensional table. A value of the corresponding operating frequency can be determined according to the current operating time and the current humidity. The operating frequency table is as follows:

| current humidity $A_i$ <br> operating time $B_j$ | $A_1$ | $A_2$ | $A_3$ | $A_4$ | $A_5$ |
|---|---|---|---|---|---|
| $B_1$ | $P_{11}$ | $P_{21}$ | $P_{31}$ | $P_{41}$ | $P_{51}$ |
| $B_2$ | $P_{12}$ | $P_{22}$ | $P_{32}$ | $P_{42}$ | $P_{52}$ |
| $B_3$ | $P_{13}$ | $P_{23}$ | $P_{33}$ | $P_{43}$ | $P_{53}$ |
| $B_4$ | $P_{14}$ | $P_{24}$ | $P_{34}$ | $P_{44}$ | $P_{54}$ |
| $B_5$ | $P_{15}$ | $P_{25}$ | $P_{35}$ | $P_{45}$ | $P_{55}$ |

$A_i$ is the current humidity, $B_j$ is the operating time, and $P_{ij}$ is the corresponding operating frequency.

Therefore, the operating time $B_j$ and the current humidity $A_i$ can be determined first according to the frequency control parameter, and then the operating frequency $P_{ij}$ can be obtained by looking up the table according to the operating time $B_j$ and the current humidity $A_i$.

It should be noted that the operating time may be a duration from the start of the preset function, or a current duration from the start of the air conditioner. In addition, since the operating time is a continuous value, the corresponding operating times in the table are discrete values, when looking up the table according to the acquired operating time, the following rules can be used.

a) the operating time $B_j$ in the table is arranged in order in the operating frequency table, that is, when $B_1 < B_2 < B_3 < B_4 < B_5$, or $B_1 > B_2 > B_3 > B_4 > B_5$, determining whether the operating time is greater than the maximum value of $B_j$ or less than the minimum value of $B_j$;

If yes, the table is looked up according to the maximum value of $B_j$ or the minimum value of $B_j$ to obtain the corresponding operating frequency. Otherwise, $B_j$ with the smallest absolute value of a difference from the operating time is determined according to the operating time, and the table is looked up according to the $B_j$ with the smallest absolute value of the difference from the operating time to obtain the operating frequency.

b) the operating time $B_j$ in the table is arranged out of order in the operating frequency table, the absolute value of the difference between each $B_j$ and the operating time is calculated in turn, and the $B_j$ with the smallest absolute value of the difference from the operating time is chosen for looking up the table.

Since the current humidity is a continuous value, and the current humidity in the table is a discrete value, the same rules as the operating time can be used to look up the table according to the current humidity. In addition, the above table is only used to explain the present disclosure, not to limit the present disclosure. It is understandable that the specific content of the frequency operating table can be determined by the developer according to an empirical formula.

In an embodiment, the operation S30 includes:

Operation S37, determining the rotation speed of the fan according to the air speed control parameter, and determining the operating frequency according to the frequency control parameter; and

Operation S38, adjusting an operating speed of the fan to the rotation speed of the fan, and adjusting a current operating frequency of the compressor to the operating frequency.

In this embodiment, the operating frequency of the compressor and the fan speed of the air conditioner can be adjusted at the same time, such that the cooling capacity of the air conditioner is ensured by adjusting the fan speed, and the cooling capacity of the air conditioner is further protected by adjusting the operating frequency of the compressor, and the risk of condensation of the air conditioner is reduced.

It should be noted that since the air deflector is adjusted to the corresponding angle, the cold air will not blow directly on the human body, and by adjusting the speed of the fan and/or the operating frequency of the compressor, the cooling effect of the air conditioner is ensured, so that the blowing sensation index is greater than the preset threshold.

In this embodiment, the method includes: when a preset function is turned on, obtaining a control parameter of the air conditioner, the control parameter of the air conditioner includes at least one of an air deflector control parameter, an air speed control parameter and a frequency control parameter; adjusting an air guide angle of the air deflector of the air conditioner according to the air deflector control parameter; and adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold. Since the method for controlling the air conditioner proposed in the present disclosure achieves the purpose of ensuring that the blowing sensation index is greater than the preset threshold, there is no need to add a special sensor for sensing, the effect of reducing the production cost of the air conditioner is achieved while ensuring the comfort index of the air conditioner.

Further, as shown in FIG. 3, FIG. 3 is a schematic flowchart of the method for controlling the air conditioner according to a second embodiment of the present disclosure. Based on the above first embodiment, the operation S31 includes:

Operation S311, determining a maximum air speed, a minimum air speed, a maximum air speed level, and a target air speed level corresponding to the preset function according to the air speed control parameter; and

Operation S312, calculating the rotation speed of the fan corresponding to the preset function according to the maximum air speed, the minimum air speed, the maximum air speed level, and the target air speed level.

In this embodiment, when the air conditioner is currently in an automatic air mode, the target air speed level may be determined according to an automatic air calculation rule, and when the air conditioner is in a mode where a fixed air speed has been set, the current air speed level is acquired as the target air speed level.

After the target air speed level is determined, the maximum air speed, the minimum air speed, and the maximum air speed level corresponding to the preset function can be obtained, and the fan speed S can be calculated according to the following formula:

$$S = \frac{\text{FuncA\_MaxFan} - \text{FuncA\_MinFan}}{\text{FanLeve\_Max}} \times \text{FanLeve} + \text{FuncA\_MinFan}$$

FuncA_MaxFan and FuncA_MinFan are respectively the maximum air speed and the minimum air speed corresponding to the preset function, FanLeve_Max is the maximum air speed level, and FanLeve is the target air speed level.

It should be noted that FuncA_MaxFan is greater than the maximum air speed when the preset function is not turned on, and FuncA_MinFan is less than the minimum air speed when the preset function is not turned on. Different functions have different FuncA_MaxFan and FuncA MinFan.

In this embodiment, the maximum air speed, the minimum air speed, the maximum air speed level, and the target air speed level corresponding to the preset function are determined according to the air speed control parameter; and the rotation speed of the fan corresponding to the preset function is calculated according to the maximum air speed, the minimum air speed, the maximum air speed level, and the target air speed level. In this way, after the preset function is turned on, the fan speed is increased, thereby ensuring the cooling effect of the preset function.

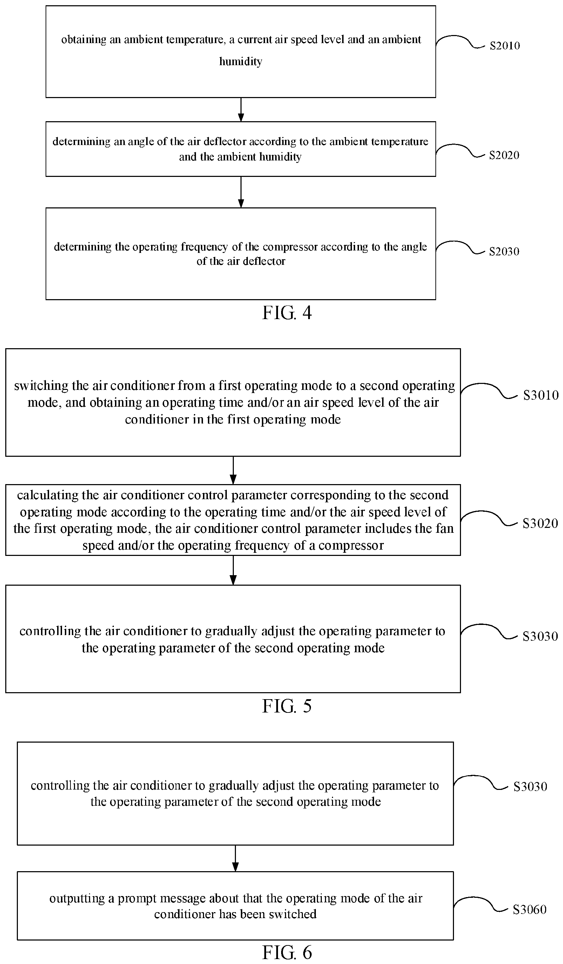

As shown in FIG. 4, FIG. 4 is a schematic flowchart of the method for controlling the air conditioner according to a third embodiment of the present disclosure. The method for controlling the air conditioner includes:

Operation S2010, obtaining an ambient temperature and an ambient humidity.

In an embodiment, the indoor unit of the air conditioner is equipped with a temperature sensor and a humidity sensor. The temperature sensor can obtain the ambient temperature of the indoor environment the indoor unit is located, and the humidity sensor can obtain the ambient humidity of the indoor environment the indoor unit is located. The ambient temperature and ambient humidity obtained by the sensors can be converted into digital information, and can be sent to a processing device (for example, a CPU or a micro-processing).

The indoor unit of the air conditioner is further provided with an air outlet, and the air deflector is provided on the air outlet, and the air deflector may include an inner air deflector and an outer air deflector. The air conditioner controls an air outlet volume and an air outlet direction according to the air guide angle of the air deflector. The air guide angle may include an inner air guide angle corresponding to the inner air deflector and an outer air guide angle corresponding to the outer air deflector. According to the inner air guide angle and the outer air guide angle, the inner air deflector and the outer air deflector are controlled to work together to produce different cooling effects and wind avoiding people effects.

Operation S2020, determining the angle of the air deflector according to the ambient temperature and the ambient humidity.

In an embodiment, when the ambient temperature and the ambient humidity are obtained, the angle of the air deflector can be determined according to the ambient temperature and the ambient humidity. When the ambient temperature and humidity are high, the angle of the air deflector can be controlled to increase, so that the air output is increased, thereby producing a better cooling effect.

In an embodiment, determining the angle of the air deflector according to the ambient temperature and the ambient humidity includes the following operations:

Operation S2021, obtaining a current set temperature.

In an embodiment, the current set temperature may be a cooling temperature of an air conditioner set by a control terminal, and the control terminal may be a remote control and/or a smart mobile terminal.

Those skilled in the art can understand that if the temperature can be set through a smart mobile terminal, the air conditioner is provided with a data communication device, and the data communication device can be Bluetooth, WiFi, or ZigBee. The air conditioner may directly communicate with the mobile terminal, or may communicate with the smart mobile terminal through a transfer device. The transfer device may be a data transfer device such as a wireless router.

Operation S2022, when the ambient temperature is greater than the current set temperature, and the ambient humidity is greater than a first preset humidity, using a first preset angle as the angle of the air deflector.

In an embodiment, when the ambient temperature and the current set temperature are acquired, the magnitudes of the ambient temperature and the current set temperature are compared. When the ambient temperature is greater than the current set temperature, it can be determined that the cooling effect of the air conditioner at the current moment is not good, and when the ambient humidity is acquired, the ambient humidity can be compared with the first preset humidity. When the ambient temperature is greater than the current set temperature and the ambient humidity is greater than the first preset humidity, the first preset angle may be used as the angle of the air deflector to ensure the rapid cooling capacity of the air conditioner.

Operation S2023, when the ambient temperature is less than or equal to the current set temperature, and the ambient humidity is less than or equal to a second preset humidity, using a second preset angle as the angle of the air deflector, the first preset angle is greater than the second preset angle.

In an embodiment, when the air conditioner determines that the ambient temperature at the current moment is less than or equal to the current set temperature, and the ambient humidity is less than or equal to the second preset humidity, it can be determined that the cooling effect of the air conditioner at the current moment is better, so the angle of the air deflector is adjusted to be smaller, so as to achieve the effect of avoiding people and further improve the comfort of the air conditioner. Therefore, the second preset angle can be used as the angle of the air deflector, and the second air guide angle is smaller than the first air guide angle.

In an embodiment, determining the angle of the air deflector according to the ambient temperature and the ambient humidity includes the following operations:

Operation S2024, obtaining a current set temperature, a first temperature threshold, and a second temperature threshold;

Operation S2025, when the ambient temperature is greater than the current set temperature and the first temperature threshold, and the ambient humidity is greater than the first preset humidity, using the first preset angle as the angle of the air deflector; and

Operation S2026, when the ambient temperature is less than or equal to the current set temperature and the second temperature threshold, and the ambient humidity is less than or equal to the second preset humidity, using the second preset angle as the angle of the air deflector, the first preset angle is greater than the second preset angle.

In an embodiment, when determining the cooling effect of the air conditioner based on the current ambient temperature and the current set temperature, it may not be possible to accurately determine the cooling effect of the air conditioner. Therefore, the first temperature threshold and the second temperature threshold can be set in the air conditioner. When the ambient temperature is greater than the current set temperature and the first temperature threshold, and the ambient humidity is greater than the first preset humidity, it is determined that the cooling effect of the air conditioner is not good, and the first preset angle is used as the angle of the air deflector to ensure the rapid cooling capacity of the air conditioner.

When the ambient temperature is less than or equal to the current set temperature and the second temperature threshold, and the ambient humidity is less than or equal to the second preset humidity, it is determined that the cooling effect of the air conditioner at the current moment is better, so that the angle of the air deflector can be reduced, so as to achieve the effect of avoiding people. That is, the second preset angle is used as the angle of the air deflector.

It should be noted that the angle of the air deflector may be the angle of the air deflector relative to the air outlet, and when the angle of the air deflector is 90°, it may be the air guide angle having the maximum air output. Therefore, the first preset angle may be 90°, and the second preset angle may be 45°. The first temperature threshold and the second temperature threshold may be determined according to the current set temperature For example, the value corresponding to the first temperature threshold may be a value corresponding to the current set temperature plus one, and the value corresponding to the second temperature threshold may be a value corresponding to the current set temperature minus one.

In addition, the angle of the air deflector may include the inner air guide angle of the inner air deflector and the outer air guide angle of the outer air deflector. The inner air guide angle and the outer air guide angle may be the same or different. When the inner air guide angle is different from the outer air guide angle, the angle of the air deflector may include two different angles, that is, the first preset angle may include two different values to correspond to the inner air guide angle and the outer air guide angle respectively.

Further, when determining the inner air guide angle and the outer air guide angle, the inner air deflector and the outer air deflector can be controlled to operate at the inner air guide angle and the outer air guide angle, respectively, The entity that executes the control of the inner air deflector and the outer air deflector to operate at the inner and outer air guide angles may be the data processing unit of the air conditioner. The data processing unit may be a CPU or a microprocessor. In order to realize the rapid processing of the control data and improve the response speed of the air conditioner, a special micro-processing only used for processing the control data of the air deflector may be added to the air conditioner. When the air conditioner needs to control the air deflector, the special micro-processing can directly read the angle of the air deflector from the storage medium, and then control the air deflector according to the angle of the air deflector. The air deflector can be controlled by a stepping motor or by other mechanical devices, which is not limited in this embodiment.

Operation S2030, determining the operating frequency of the compressor according to the angle of the air deflector.

In an embodiment, before the operation S2030, the method further includes the following operations:

Operation S2040, obtaining a preset air speed adjustment coefficient and a current air speed level;
Operation S2050, determining a target air speed level according to the preset air speed adjustment coefficient and the current air speed level; and
Operation S2060, calculating a target fan speed according to the target air speed level.

In an embodiment, the air speed adjustment coefficient K is a preset value and is a constant, for example, K=0.8. After the air speed adjustment coefficient is obtained, the current air speed level can be obtained. The current air speed level can be an air speed level set through a control terminal, or an air speed level calculated according to an automatic air rule. When the current air speed level FanLevel is obtained, the target air speed level can be calculated according to the following formula: FanLevel_Run=FanLevel $\times$ K

FanLevel Run is the target air speed level.

When the target air speed level is calculated, the maximum air speed, the minimum air speed, and the maximum air speed level can be obtained, and the target fan speed S can be calculated according to the following formula:

$$S = \frac{\text{FuncA\_MaxFan} - \text{Func\_MinFan}}{\text{FanLeve\_Max}} \times \text{FanLeve\_Run} + \text{Func\_MinFan}$$

Func_MaxFan and Func MinFan are the maximum air speed and the minimum air speed respectively, and FanLeve_Max is the maximum air speed level.

It should be noted that the maximum air speed, the minimum air speed, and the maximum air speed level are fixed values stored in a storage medium.

When the target fan speed is calculated, the fan is controlled to adjust the current operating speed to the target fan speed.

In an embodiment, the operation S2030 includes the following operations:

Operation S2031, obtaining a frequency lookup table corresponding to the air guide angle and the target air speed level;
Operation S2032, querying a tag frequency in the frequency lookup table based on the ambient temperature and the ambient humidity; and
Operation S2033, calculating the operating frequency of the compressor according to the tag frequency and the target air speed level.

In an embodiment, when the air guide angle is determined, a frequency lookup table corresponding to the air guide angle stored in the storage medium is obtained. The operating frequency table is a two-dimensional table, and the corresponding tag frequency can be determined according to the ambient temperature and the ambient humidity. The frequency lookup table is as follows:

| ambient humidity $A_i$ / ambient temperature $B_j$ | $A_1$ | $A_2$ | $A_3$ | $A_4$ | $A_5$ |
|---|---|---|---|---|---|
| $B_1$ | $P_{11}$ | $P_{21}$ | $P_{31}$ | $P_{41}$ | $P_{51}$ |
| $B_2$ | $P_{12}$ | $P_{22}$ | $P_{32}$ | $P_{42}$ | $P_{52}$ |
| $B_3$ | $P_{13}$ | $P_{23}$ | $P_{33}$ | $P_{43}$ | $P_{53}$ |
| $B_4$ | $P_{14}$ | $P_{24}$ | $P_{34}$ | $P_{44}$ | $P_{54}$ |
| $B_5$ | $P_{15}$ | $P_{25}$ | $P_{35}$ | $P_{45}$ | $P_{55}$ |

$A_i$ is the ambient humidity, $B_j$ is the ambient temperature, and $P_{ij}$ is the corresponding tag frequency.

Therefore, the tag frequency $P_{ij}$ can be obtained by looking up the table according to the ambient temperature $B_j$ and the ambient humidity $A_i$.

It should be noted that, since the actual ambient temperature is a continuous value, and the corresponding ambient temperature in the table is a discrete value, when looking up the table according to the obtained operating time, the following rules can be used.

a) the ambient temperature $B_j$ in the table is arranged in order in the frequency lookup table, that is, when $B_1 < B_2 < B_3 < B_4 < B_5$, or $B_1 > B_2 > B_3 > B_4 > B_5$, it is determined whether the ambient temperature is greater than the maximum value of $B_j$ or less than the minimum value of $B_j$;

If yes, the table is looked up according to the maximum value of $B_j$ or the minimum value of $B_j$ to obtain the corresponding tag frequency. Otherwise, the $B_j$ with the smallest absolute value of the difference from itself is determined according to the actual ambient temperature, and the table is looked up according to the $B_j$ with the smallest absolute value of the difference from itself to obtain the tag frequency.

b) the operating time $B_j$ in the table is arranged out of order in the operating frequency table, and the absolute value of the difference between each $B_j$ and the actual ambient temperature is calculated in turn, $B_j$ with the smallest absolute value is chosen as the ambient temperature for looking up the table, and the actual ambient temperature above is the actual ambient temperature obtained.

Since the ambient humidity is a continuous value, and the ambient humidity in the table is a discrete value, the same rules as the ambient temperature can be used to look up the table according to the ambient humidity. In addition, the above table is only used to explain the present disclosure, not to limit the present disclosure. It is understandable that the specific content of the frequency lookup table can be determined by the developer according to an empirical formula.

When the tag frequency is obtained, the operating frequency M of the compressor can be calculated according to the following formula:

$$M = Pij - (FanLeve\_ - Max\text{-}FanLevel\_Run) \times \sigma$$

$\sigma$ is a slope coefficient of a function curve fitted with the ambient temperature and the ambient humidity as independent variables and the tag frequency as the dependent variable, and $P_{ij}$ is the found tag frequency.

When the operating frequency M of the compressor is calculated, the compressor is controlled to adjust the current operating frequency to M.

In an embodiment, after the operation S2033, the method further includes:
Operation S2034, when the operating frequency of the compressor is less than a minimum operating frequency, controlling the compressor to operate at the minimum operating frequency.

In an embodiment, the minimum operating frequency is the minimum tag frequency in the frequency lookup table and the minimum value of $P_{ij}$.

In an embodiment, the ambient temperature and the ambient humidity are acquired first, and then the angle of the air deflector is determined according to the ambient temperature and the ambient humidity, and the operating frequency of the compressor is determined according to the angle of the air deflector. In this way, through the joint adjustment of multiple factors, the effect of improving the comfort of the air conditioner is realized, but no special sensor is added, thereby solving the technical problem of the increase in the production cost and maintenance cost of the air conditioner, and the decrease in the production efficiency.

As shown in FIG. 5, FIG. 5 is a schematic flowchart of the method for controlling the air conditioner according to a fourth embodiment of the present disclosure. The method for controlling the air conditioner includes:
Operation S3010, switching the air conditioner from a first operating mode to a second operating mode, and obtaining an operating time and/or an air speed level of the air conditioner in the first operating mode.

In an embodiment, the first operating mode and the second operating mode refer to preset operating modes of the air conditioner stored in the storage device of the air conditioner. The switching of the air conditioner from the first operating mode to the second operating mode refers to the action of the air conditioner switching from the current operating mode (first operating mode) to the target operating mode (second operating mode) when receiving a mode switching instruction. When the air conditioner enters the second operating mode, the air conditioner adjusts operating parameters accordingly.

Before the air conditioner adjusts the operating parameters, the operating time and/or the air speed level of the air conditioner in the first operating mode are first obtained. The air speed level may be a fixed air speed level set by a user, or an air speed level calculated according to an automatic air calculation rule.

In an embodiment, before the operation S3010, the method further includes the following operations:

Operation S3040, when switching the air conditioner from the first operating mode to the second operating mode, obtaining an angle of the air deflector corresponding to the second operating mode, the angle of the air deflector includes the inner air guide angle and the outer air guide angle; and

Operation S3050, adjusting operating angles of the inner air deflector and the outer air deflector of the air conditioner respectively according to the inner air guide angle and the outer air guide angle.

In an embodiment, the air outlet of the air conditioner includes an inner air deflector and an outer air deflector. The operating angle of the inner air deflector is an inner air guide angle, and the operating angle of the outer air deflector is an outer air guide angle. When the air conditioner is switched from the first operating mode to the second operating mode, the air guide angle of the second operating mode is obtained, and the inner air guide angle is obtained according to the air deflector control parameter. The angle of the inner air deflector may include an inner air guide angle for controlling the operating angle of the inner air deflector. The angle of the outer air deflector can also be obtained according to the angle of the air deflector. The angle of the outer air deflector may include an outer air guide angle for controlling the operating angle of the outer air deflector. The entity that executes the acquisition of the inner air guide angle and the outer air guide angle according to the air deflector control parameter may be a data processing unit of an air conditioner. The data processing unit may be a CPU or a microprocessor.

In order to realize the rapid processing of the control data and improve the response speed of the air conditioner, a special micro-processing only used to process the control data of the air deflector can be added to the air conditioner. When the air conditioner enters the preset function, the special micro-processing can directly read the angle of the air deflector from the storage medium, and then determine the inner and outer air guide angles according to the angle of the air deflector.

When determining the inner air guide angle and the outer air guide angle, the operating angle of the inner air deflector is adjusted to the inner air guide angle, and the operation angle of the outer air deflector is adjusted to the outer air guide angle. The operating angle of the inner air deflector and the operating angle of the outer air deflector can be controlled by a stepping motor, or can be controlled by other mechanical devices, which is not limited in the present disclosure.

It should be noted that the inner air guide angle and the outer air guide angle can be a fixed value. When the operating angles of the inner air deflector and the outer air deflector of the air conditioner are adjusted to the inner air guide angle and the outer air guide angle, different purposes can be achieved. For example, when the first operating mode is a strong cooling mode and the second operating mode is a soft wind mode. The opening of the air deflector corresponding to the first operating mode is larger than the opening of the air deflector corresponding to the second operating mode, the size of the opening of the air deflector is determined by the inner air guide angle and the outer air guide angle to achieve a strong cooling effect in the first operating mode, and a soft wind effect in the second operating mode.

Operation S3020, calculating the air conditioner control parameter corresponding to the second operating mode according to the operating time and/or the air speed level of the first operating mode, the air conditioner control parameter includes the fan speed and/or the operating frequency of a compressor.

In an embodiment, when the air conditioner is switched from the first operating mode to the second operating mode, the operating time will not be reset. When the mode is switched, time is accumulated on the basis of the operating time of the first operating mode to determine the operating time of the second operating mode, so that there is time continuity between different modes. For example, when the air conditioner has operated in the first operating mode for 53 minutes, the starting point of the operating time of the second operating mode is 53 minutes.

When the operating time and/or the air speed level are obtained, the target frequency and the target fan speed corresponding to the second operating mode are calculated.

In an embodiment, calculating the target frequency includes the following operations:

Operation S3021, obtaining an operating frequency table and a current humidity corresponding to the second operating mode; and

Operation S3022, obtaining a target frequency corresponding to the operating time and the current humidity according to the operating frequency table, and using the target frequency as the operating frequency of the compressor corresponding to the second operating mode.

In an embodiment, the operating frequency table pre-stored in the storage medium is obtained. Different operating modes have different operating frequency tables. The operating frequency table is a two-dimensional table, and the corresponding operating frequency value can be determined according to the current operating time and the current humidity. The operating frequency table is as follows:

| current humidity $A_i$ \\ operating time $B_j$ | $A_1$ | $A_2$ | $A_3$ | $A_4$ | $A_5$ |
|---|---|---|---|---|---|
| $B_1$ | $P_{11}$ | $P_{21}$ | $P_{31}$ | $P_{41}$ | $P_{51}$ |
| $B_2$ | $P_{12}$ | $P_{22}$ | $P_{32}$ | $P_{42}$ | $P_{52}$ |
| $B_3$ | $P_{13}$ | $P_{23}$ | $P_{33}$ | $P_{43}$ | $P_{53}$ |
| $B_4$ | $P_{14}$ | $P_{24}$ | $P_{34}$ | $P_{44}$ | $P_{54}$ |
| $B_5$ | $P_{15}$ | $P_{25}$ | $P_{35}$ | $P_{45}$ | $P_{55}$ |

$A_i$ is the current humidity, $B_j$ is the operating time, and $P_{ij}$ is the corresponding operating frequency.

Therefore, the operating frequency $P_{ij}$ can be obtained according to the operating time $B_j$ and the current humidity $A_i$ in a lookup table.

It should be noted that the operating time is the operating time of the operating mode corresponding to the operating frequency table. In addition, since the operating time is a continuous value, the corresponding operating time in the table is a discrete value, so when looking up the table according to the acquired operating time, the following rules can be used.

a) the operating time $B_j$ in the table is arranged in order in the operating frequency table, that is, when $B_1 < B_2 < B_3 < B_4 < B_5$, or $B_1 > B_2 > B_3 > B_4 > B_5$, it is determined that whether the operating time is greater than the maximum value of $B_j$ or less than the minimum value of $B_j$.

If yes, the table is looked up according to the maximum value of $B_j$ or the minimum value of $B_j$ to obtain the

corresponding operating frequency. Otherwise, the Bj with the smallest absolute value of the difference from itself is determined according to the operating time, and the table is looked up according to the $B_j$ with the smallest absolute value of the difference from itself to obtain the operating frequency.

b) the operating time $B_j$ in the table is arranged out of order in the operating frequency table, and the absolute value of the difference between each $B_j$ and the operating time is calculated in turn, and the $B_j$ with the smallest absolute value is selected as the operating time for looking up the table.

Since the current humidity is a continuous value, and the current humidity in the table is a discrete value, the same rules as the operating time can be used to look up the table according to the current humidity. In addition, the above table is only used to explain the present disclosure, not to limit the present disclosure. It is understandable that the specific content of the frequency operating table can be determined by the developer according to an empirical formula.

In an embodiment, calculating the fan speed includes the following operations:

Operation S3023, obtaining a maximum air speed, a minimum air speed, and a maximum air speed level corresponding to the second operating mode, the air speed levels of the first operating mode and the second operating mode are the same;

Operation S3024, calculating the target fan speed corresponding to the second operating mode according to the maximum air speed, the minimum air speed, the maximum air speed level, and the air speed level.

In an embodiment, the air speed level corresponding to the first operating mode is acquired as the target air speed level. After the target air speed level is determined, the maximum air speed, the minimum air speed, and the maximum air speed level corresponding to the second operating mode can be obtained, and the target fan speed S can be calculated according to the following formula:

$$S = \frac{\mathrm{FuncA\_MaxFan} - \mathrm{FuncA\_MinFan}}{\mathrm{FanLeve\_Max}} \times \mathrm{FanLeve} + \mathrm{FuncA\_MinFan}$$

FuncA_MaxFan and FuncA_MinFan are respectively the maximum air speed and the minimum air speed corresponding to the second operating mode, FanLeve Max is the maximum air speed level and FanLeve is the target air speed level.

Operation S3030, controlling the air conditioner to gradually adjust the operating parameter to the operating parameter of the second operating mode.

In one embodiment, the air conditioner fan speed is adjusted according to the target fan speed, and or the compressor frequency of the air conditioner is adjusted according to the target frequency.

In an embodiment, the operation of adjusting the compressor frequency according to the target frequency includes:

Operation S3031, controlling the compressor to gradually adjust the operating frequency from the current compressor frequency to the target frequency.

In an embodiment, after the target compressor operating frequency is determined, the operating frequency of the compressor is controlled to gradually adjust from the current frequency to the target compressor operating frequency.

It should be noted that the frequency adjustment process may set a time threshold, for example, set a time threshold so that the air conditioner completes the frequency adjustment action within a predetermined time. The time threshold can be customized, for example, set to 3 minutes.

In an embodiment, the operation of adjusting the fan speed according to the target fan speed include:

Operation S3032, controlling the fan to gradually adjust the operating speed from the current fan speed to the target fan speed.

In an embodiment, the control parameter includes the target fan speed in the second operating mode. After the target fan speed is determined, the control fan is gradually adjusted from the current speed to the target fan speed.

It should be noted that the air speed adjustment process may set a time threshold, for example, set a time threshold so that the air conditioner completes the air speed adjustment action within a predetermined time. The time threshold can be customized, for example, set to 3 minutes.

In this embodiment, when the air conditioner is switched from the first operating mode to the second operating mode, first the operating time and/or the air speed level of the air conditioner in the first operating mode are obtained, then the air conditioner control parameter corresponding to the second operating mode is calculated according to the operating time and/or the air speed level of the first operating mode, and finally, the air conditioner is controlled to gradually adjust the operating parameter to the operating parameter of the second operating mode. In this way, due to the air speed level and/or operating time continuity used to calculate the control parameter, and the switching project is a gradual switching, the technical problem of the user's discomfort caused by the sudden change of the operating parameter of the air conditioner is solved.

Further, as shown in FIG 6, FIG. 6 is a schematic flowchart of a method for controlling an air conditioner according to a fifth embodiment of the present disclosure. After Operation S3030, the method further includes: Operation S3060, outputting a prompt message about that the operating mode of the air conditioner has been switched.

In an embodiment, after the operating mode of the air conditioner is successfully switched, a prompt message about that the operating mode has been switched may be output, such that the user can determine whether the air conditioner has executed the control instruction of the control terminal according to the prompt information, so that repeated operations and misoperations are avoided.

Besides, the present disclosure further provides an air conditioner, including: a memory, a processor, and a program for controlling the air conditioner stored in the memory and executable on the processor, the program, when executed by the processor, implements the operations of the method for controlling the air conditioner as described in the above embodiments.

Besides, the present disclosure further provides a computer readable storage medium, a program for controlling an air conditioner is stored in the computer readable storage medium, the program, when executed by a processor, implements the operations of the method for controlling the air conditioner as described in the above embodiments.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The serial numbers of the foregoing embodiments of the present disclosure are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present disclosure can be embodied in the form of software product in essence or the part that contributes to the existing technology. The computer software product is stored in a storage medium (such as ROM/RAM, magnetic disk, optical disk) as described above, including several instructions to cause a terminal device (which can be an air conditioner) to execute the method described in each embodiment of the present disclosure.

The above are only some embodiments of the present disclosure, and do not limit the scope of the present disclosure thereto. Under the inventive concept of the present disclosure, equivalent structural transformations made according to the description and drawings of the present disclosure, or direct/indirect application in other related technical fields are included in the scope of the present disclosure.

**Claims**

1. A method for controlling an air conditioner, comprising following operations:

   turning on a preset function, and obtaining a control parameter of the air conditioner, wherein the control parameter of the air conditioner includes at least one of an air deflector control parameter, an air speed control parameter and a frequency control parameter;
   adjusting an air guide angle of an air deflector of the air conditioner according to the air deflector control parameter; and
   adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

2. The method for controlling the air conditioner of claim 1, wherein the air deflector includes an inner air deflector and an outer air deflector, and the operation of adjusting the air guide angle of the air deflector of the air conditioner according to the air deflector control parameter includes:

   determining an inner air guide angle of the inner air deflector and an outer air guide angle of the outer air deflector according to the air deflector control parameter; and
   adjusting an operating angle of the inner air deflector to the inner air guide angle, and adjusting an operating angle of the outer air deflector to the outer air guide angle.

3. The method for controlling the air conditioner of claim 1, wherein the operation of adjusting the rotation speed of the fan of the air conditioner according to the air speed control parameter, and/or adjusting the operating frequency of the compressor of the air conditioner according to the frequency control parameter includes:

calculating the rotation speed of the fan corresponding to the preset function according to the air speed control parameter; and
adjusting an operating speed of the fan to the rotation speed of the fan.

4. The method for controlling the air conditioner of claim 3, wherein the operation of calculating the rotation speed of the fan corresponding to the preset function according to the air speed control parameter includes:

determining a maximum air speed, a minimum air speed, a maximum air speed level, and a target air speed level corresponding to the preset function according to the air speed control parameter; and
calculating the rotation speed of the fan corresponding to the preset function according to the maximum air speed, the minimum air speed, the maximum air speed level, and the target air speed level.

5. The method for controlling the air conditioner of claim 1, wherein the operation of adjusting the rotation speed of the fan according to the air speed control parameter, and/or adjusting the operating frequency of the compressor according to the frequency control parameter includes:

obtaining an operating frequency table corresponding to the preset function;
determining a current operating time and a current humidity according to the frequency control parameter; and
querying the corresponding operating frequency in the operating frequency table according to the current operating time and the current humidity, and controlling the compressor to operate at the operating frequency.

6. The method for controlling the air conditioner of claim 1, wherein the operation of adjusting the rotation speed of the fan according to the air speed control parameter, and/or adjusting the operating frequency of the compressor according to the frequency control parameter includes:

determining the rotation speed of the fan according to the air speed control parameter, and determining the operating frequency according to the frequency control parameter; and
adjusting an operating speed of the fan to the rotation speed of the fan, and adjusting a current operating frequency of the compressor to the operating frequency.

7. The method for controlling the air conditioner of claim 1, wherein before the operation of turning on the preset function and obtaining the control parameter of the air conditioner, the method further includes:
receiving a start instruction of the preset function sent by a control terminal to turn on the preset function.

8. The method for controlling the air conditioner of claim 7, wherein after the operation of receiving the start instruction of the preset function sent by the control terminal to turn on the preset function, the method further includes:
outputting a prompt message about that the preset function has been turned on.

9. The method for controlling the air conditioner of claim 1, wherein the air deflector control parameter includes an angle of the air deflector, and the frequency control parameter includes the operating frequency of the compressor, and the operation of obtaining the control parameter of the air conditioner includes:

obtaining an ambient temperature and an ambient humidity;
determining the angle of the air deflector according to the ambient temperature and the ambient humidity; and
determining the operating frequency of the compressor according to the angle of the air deflector.

10. The method for controlling the air conditioner of claim 9, wherein the angle of the air conditioner is proportional to the ambient temperature and the ambient humidity.

11. The method for controlling the air conditioner of claim 10, wherein the operation of adjusting the air guide angle of the air deflector of the air conditioner according to the air deflector control parameter includes:

obtaining a current set temperature;
when the ambient temperature is greater than the current set temperature, and the ambient humidity is greater than a first preset humidity, adjusting the angle of the air deflector according to a first preset angle; and when the ambient temperature is less than or equal to the current set temperature, and the ambient humidity is less than or equal to a second preset humidity, adjusting the angle of the air deflector according to a second preset angle, wherein the first preset angle is greater than the second preset angle.

12. The method for controlling the air conditioner of claim 10, wherein the operation of adjusting the air guide angle of the air deflector of the air conditioner according to the air deflector control parameter includes:

obtaining a current set temperature, a first temperature threshold, and a second temperature threshold; when the ambient temperature is greater than the current set temperature and the first temperature threshold, and the ambient humidity is greater than a first preset humidity, adjusting the angle of the air deflector according to a first preset angle; and
when the ambient temperature is less than or equal to the current set temperature and the second temperature threshold, and the ambient humidity is less than or equal to a second preset humidity, adjusting the angle of the air deflector according to a second preset angle, wherein the first preset angle is greater than the second preset angle.

13. The method for controlling the air conditioner of claim 9, wherein an air outlet of the air conditioner includes an inner air deflector and an outer air deflector, and the angle of the air deflector includes an inner air guide angle of the inner air deflector and an outer air guide angle of the outer air deflector.

14. The method for controlling the air conditioner of claim 9, wherein the operation of adjusting the rotation speed of the fan of the air conditioner according to the air speed control parameter includes:

obtaining a preset air speed adjustment coefficient and a current air speed level;
determining a target air speed level according to the preset air speed adjustment coefficient and the current air speed level; and
calculating a target fan speed according to the target air speed level, and adjusting the rotation speed of the fan of the air conditioner to the target fan speed.

15. The method for controlling the air conditioner of claim 14, wherein the operation of adjusting the operating frequency of the compressor of the air conditioner according to the frequency control parameter includes:

obtaining a frequency lookup table corresponding to the air guide angle and the target air speed level;
querying a tag frequency in the frequency lookup table based on the ambient temperature and the ambient humidity; and
calculating the operating frequency of the compressor according to the tag frequency and the target air speed level, and controlling the compressor of the air conditioner to operate according to the operating frequency.

16. The method for controlling the air conditioner of claim 15, wherein after the operation of calculating the operating frequency of the compressor according to the tag frequency and the target air speed level, the method further includes:
when the operating frequency of the compressor is less than a minimum operating frequency, using the minimum operating frequency as the operating frequency of the compressor.

17. The method for controlling the air conditioner of claim 1, wherein the air speed control parameter includes a fan speed, the frequency control parameter includes a compressor operating frequency, and the operation of obtaining the control parameter of the air conditioner includes:

switching the air conditioner from a first operating mode to a second operating mode, and obtaining an operating time and/or an air speed level of the air conditioner in the first operating mode;
calculating the air speed control parameter and the frequency control parameter corresponding to the second operating mode according to the operating time and/or the air speed level of the first operating mode.

18. The method for controlling the air conditioner of claim 17, wherein the operation of calculating the air speed control parameter and the frequency control parameter corresponding to the second operating mode according to the operating time and/or the air speed level of the first operating mode includes:

obtaining an operating frequency table and a current humidity corresponding to the second operating mode; and

obtaining a target frequency corresponding to the operating time and the current humidity according to the operating frequency table, and using the target frequency as the operating frequency of the compressor corresponding to the second operating mode.

19. The method for controlling the air conditioner of claim 18, wherein the operation of adjusting the rotation speed of the fan of the air conditioner according to the air speed control parameter, and/or adjusting the operating frequency of the compressor of the air conditioner according to the frequency control parameter includes:
controlling the compressor to gradually adjust the operating frequency from a current operating frequency to the target frequency.

20. The method for controlling the air conditioner of claim 17, wherein the operation of calculating the control parameter of the air conditioner corresponding to the second operating mode according to the operating time and/or the air speed level of the first operating mode includes:

obtaining a maximum air speed, a minimum air speed, and a maximum air speed level corresponding to the second operating mode, wherein air speed levels of the first operating mode and the second operating mode are same; and
calculating a target fan speed corresponding to the second operating mode according to the maximum air speed, the minimum air speed, the maximum air speed level, and the air speed level.

21. The method for controlling the air conditioner of claim 20, wherein the operation of adjusting the rotation speed of the fan of the air conditioner according to the air speed control parameter, and/or adjusting the operating frequency of the compressor of the air conditioner according to the frequency control parameter includes:
controlling the fan to gradually adjust the fan speed from a current fan speed to the target fan speed.

22. The method for controlling the air conditioner of claim 17, wherein an air outlet of the air conditioner includes an inner air deflector and an outer air deflector, an operating angle of the inner air deflector is an inner air guide angle, and an operating angle of the outer air deflector is an outer air guide angle.

23. The method for controlling the air conditioner of claim 22, wherein before the operation of obtaining the operating time and/or the air speed level of the air conditioner in the first operating mode, the method further includes:

switching the air conditioner from the first operating mode to the second operating mode, and obtaining an angle of the air deflector corresponding to the second operating mode, wherein the angle of the air deflector includes the inner air guide angle and the outer air guide angle; and
the operation of adjusting the air guide angle of the air deflector of the air conditioner according to the air deflector control parameter includes:
adjusting operating angles of the inner air deflector and the outer air deflector of the air conditioner respectively according to the inner air guide angle and the outer air guide angle.

24. The method for controlling the air conditioner of claim 17, wherein after the operation of adjusting the rotation speed of the fan of the air conditioner according to the air speed control parameter, and/or adjusting the operating frequency of the compressor of the air conditioner according to the frequency control parameter, the method further includes:
outputting a prompt message about that the operating mode of the air conditioner has been switched.

25. An air conditioner, comprising: a memory, a processor, and a program for controlling the air conditioner stored in the memory and executable on the processor, the program, when executed by the processor, implements the following operations:

turning on a preset function, and obtaining a control parameter of the air conditioner, wherein the control parameter of the air conditioner includes at least one of an air deflector control parameter, an air speed control parameter and a frequency control parameter;
adjusting an air guide angle of an air deflector of the air conditioner according to the air deflector control parameter; and
adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

**26.** A computer readable storage medium, wherein a program for controlling an air conditioner is stored in the computer readable storage medium, the program, when executed by a processor, implements the following operations:

turning on a preset function, and obtaining a control parameter of the air conditioner, wherein the control parameter of the air conditioner includes at least one of an air deflector control parameter, an air speed control parameter and a frequency control parameter;

adjusting an air guide angle of an air deflector of the air conditioner according to the air deflector control parameter; and

adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold.

1005

1001

| processor |
| --- |

1002

| operating system |
| --- |
| network communication module |
| user interface module |
| program for controlling an air conditioner |

memory

1003

1004

| user interface |
| --- |

| network interface |
| --- |

**FIG. 1**

| when a preset function is turned on, obtaining a control parameter of the air conditioner, the control parameter of the air conditioner includes at least one of an air deflector control parameter, an air speed control parameter and a frequency control parameter |
| --- |

S10

| adjusting an air guide angle of the air deflector of the air conditioner according to the air deflector control parameter |
| --- |

S20

| adjusting a rotation speed of a fan of the air conditioner according to the air speed control parameter, and/or adjusting an operating frequency of a compressor of the air conditioner according to the frequency control parameter to ensure that a blowing sensation index is greater than a preset threshold |
| --- |

S30

**FIG. 2**

| determining a maximum air speed, a minimum air speed, a maximum air speed level, and a target air speed level corresponding to the preset function according to the air speed control parameter |
| --- |

S311

| calculating the rotation speed of the fan corresponding to the preset function according to the maximum air speed, the minimum air speed, the maximum air speed level, and the target air speed level |
| --- |

S312

**FIG. 3**

obtaining an ambient temperature, a current air speed level and an ambient humidity — S2010

determining an angle of the air deflector according to the ambient temperature and the ambient humidity — S2020

determining the operating frequency of the compressor according to the angle of the air deflector — S2030

FIG. 4

switching the air conditioner from a first operating mode to a second operating mode, and obtaining an operating time and/or an air speed level of the air conditioner in the first operating mode — S3010

calculating the air conditioner control parameter corresponding to the second operating mode according to the operating time and/or the air speed level of the first operating mode, the air conditioner control parameter includes the fan speed and/or the operating frequency of a compressor — S3020

controlling the air conditioner to gradually adjust the operating parameter to the operating parameter of the second operating mode — S3030

FIG. 5

controlling the air conditioner to gradually adjust the operating parameter to the operating parameter of the second operating mode — S3030

outputting a prompt message about that the operating mode of the air conditioner has been switched — S3060

FIG. 6

## INTERNATIONAL SEARCH REPORT

| International application No. |
| --- |
| **PCT/CN2019/088470** |

| | |
| --- | --- |
| **A.** | **CLASSIFICATION OF SUBJECT MATTER** |

F24F 11/64(2018.01)i; F24F 11/79(2018.01)i; F24F 11/77(2018.01)i; F24F 11/86(2018.01)i; F24F 11/61(2018.01)i; F24F 11/62(2018.01)i; F24F 11/52(2018.01)i; F24F 13/14(2006.01)i; F25B 49/02(2006.01)i; F24F 110/10(2018.01)n; F24F 110/20(2018.01)n; F24F 110/30(2018.01)n

According to International Patent Classification (IPC) or to both national classification and IPC

| | |
| --- | --- |
| **B.** | **FIELDS SEARCHED** |

Minimum documentation searched (classification system followed by classification symbols)

F24F; F25B

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; Web Of Science: 空调, 制冷, 制热, 换热, 导风, 频率, 转速, 风机, 压缩机, 吹风感指数, air conditioner, refrigeration, heat, cool, wind, guide, frequency, motor, compressor, sensation, index

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 109612039 A (GUANGDONG MIDEA REFRIGERATION EQUIPMENT CO., LTD.) 12 April 2019 (2019-04-12)<br> claims 1-10 | 1-26 |
| PX | CN 109612033 A (GUANGDONG MIDEA REFRIGERATION EQUIPMENT CO., LTD.) 12 April 2019 (2019-04-12)<br> claims 1-10 | 1-26 |
| PX | CN 109579236 A (GUANGDONG MIDEA REFRIGERATION EQUIPMENT CO., LTD.) 05 April 2019 (2019-04-05)<br> claims 1-10 | 1-26 |
| X | CN 108592326 A (GUANGDONG MIDEA REFRIGERATION EQUIPMENT CO., LTD. et al.) 28 September 2018 (2018-09-28)<br> claims 1, 7 and 8 | 1-26 |
| A | CN 103954019 A (MIDEA GROUP CO., LTD. et al.) 30 July 2014 (2014-07-30)<br> entire document | 1-26 |
| A | JP 2000314548 A (SANYO ELECTRIC CO., LTD.) 14 November 2000 (2000-11-14)<br> entire document | 1-26 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 July 2019** | **15 August 2019** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/088470**

| Patent document cited in search report | | | Publication date (day/month/year) | Patent family member(s) | | | Publication date (day/month/year) |
|---|---|---|---|---|---|---|---|
| CN | 109612039 | A | 12 April 2019 | None | | | |
| CN | 109612033 | A | 23 April 2019 | None | | | |
| CN | 109579236 | A | 05 April 2019 | None | | | |
| CN | 108592326 | A | 28 September 2018 | None | | | |
| CN | 103954019 | A | 30 July 2014 | CN | 103954019 | B | 10 May 2017 |
| JP | 2000314548 | A | 14 November 2000 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811465024
- CN 201811463694

- CN 201811462836